(19) Europäisches Patentamt / European Patent Office / Office européen des brevets

(11) **EP 3 994 358 B1**

(12) **FASCICULE DE BREVET EUROPEEN**

(45) Date de publication et mention
de la délivrance du brevet:
**07.06.2023 Bulletin 2023/23**

(21) Numéro de dépôt: **20820248.1**

(22) Date de dépôt: **31.07.2020**

(51) Classification Internationale des Brevets (IPC):
**F04D 27/02** *(2006.01)* **F04D 27/00** *(2006.01)*

(52) Classification Coopérative des Brevets (CPC):
**F04D 27/0223; F04D 27/001;** Y02T 50/50

(86) Numéro de dépôt international:
**PCT/FR2020/051421**

(87) Numéro de publication internationale:
**WO 2021/023937 (11.02.2021 Gazette 2021/06)**

(54) **RÉGULATION ANTI-POMPAGE D'UN COMPRESSEUR DE CHARGE ÉQUIPANT UN GROUPE AUXILIAIRE DE PUISSANCE**

ÜBERSPANNUNGSSCHUTZREGELUNG FÜR EINEN LADEKOMPRESSOR, DER MIT EINEM HILFSANTRIEB AUSGESTATTET IST

ANTI-SURGE REGULATION FOR A CHARGING COMPRESSOR WITH WHICH AN AUXILIARY POWER UNIT IS EQUIPPED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.08.2019 FR 1909051**

(43) Date de publication de la demande:
**11.05.2022 Bulletin 2022/19**

(73) Titulaire: **Safran Power Units
31200 Toulouse (FR)**

(72) Inventeurs:
• **ORMIERES, David Francis Pierre
77550 Moissy-Cramayel (FR)**
• **PERROT-MINOT, Louis Jean-Paul Fabien
77550 Moissy-Cramayel (FR)**

(74) Mandataire: **Brevalex
Tour Trinity
1 Bis Esplanade de La Défense
CS 60347
92035 Paris La Défense Cedex (FR)**

(56) Documents cités:
**US-A- 2 409 837 US-A1- 2007 248 453**

**Description**

**DOMAINE TECHNIQUE**

L'invention se situe dans le domaine de la régulation d'un compresseur de charge équipant un groupe auxiliaire de puissance d'un aéronef. Elle vise à empêcher le phénomène de pompage au sein du compresseur, notamment en cas de fermeture de la vanne commandant l'alimentation en air du système de régulation climatique de l'aéronef. L'invention concerne un procédé de détermination d'un paramètre de pompage représentatif du risque de phénomène de pompage dans un compresseur de charge d'un groupe auxiliaire de puissance ainsi qu'un procédé et un système de commande d'une vanne de décharge pour ce compresseur de charge.

**ÉTAT DE LA TECHNIQUE ANTÉRIEURE**

Un aéronef est généralement équipé de moteurs principaux et d'un groupe auxiliaire de puissance. Les moteurs principaux sont dédiés à la propulsion et, en régime de croisière, à la production d'énergie pour les différents équipements embarqués. Le groupe auxiliaire de puissance, appelé « Auxiliary Power Unit » (APU) en anglais, est un dispositif de fourniture de différents types d'énergie (électrique, hydraulique, pneumatique, mécanique) permettant d'alimenter les équipements embarqués, notamment lorsque les moteurs principaux sont à l'arrêt. Un groupe auxiliaire de puissance comprend typiquement un turbomoteur et un compresseur de charge entraîné mécaniquement par le turbomoteur afin d'alimenter en air comprimé un système de régulation climatique de l'aéronef. Ce système de régulation climatique, appelé « Environmental Control System » (ECS) en anglais, comprend une vanne réglable appelée « vanne avion » ou « vanne ECS » permettant de commander le débit d'air comprimé en provenance du compresseur de charge. La vanne ECS peut être complètement fermée lorsque le système de régulation climatique est alimenté par les moteurs principaux. Dans les situations où la demande en air comprimé est relativement faible, voire nulle, le compresseur de charge est susceptible d'être soumis à un phénomène de pompage qui risque de l'endommager. Pour limiter ce risque, le débit d'air en entrée du compresseur de charge peut être régulé par des volets d'entrée d'air, appelés « Inlet Guide Vanes » (IGV) en anglais. Pour une faible demande en air comprimé, notamment lorsque la vanne ECS est complètement fermée, les IGV peuvent également être positionnés en position semi-fermée ou fermée. Néanmoins, le temps de réponse des IGV est relativement lent par rapport à celui de la vanne ECS, de sorte que le phénomène de pompage risque toujours de se produire de façon transitoire. En outre, les IGV ne permettent généralement pas de stopper complètement le flux d'air entrant dans le compresseur de charge. En conséquence, le phénomène de pompage subsiste en cas de fermeture totale de la vanne ECS.

Le pompage du compresseur de charge peut être évité en équipant le groupe auxiliaire d'une vanne de décharge disposée en aval du compresseur de charge et commandée en fonction du phénomène de pompage ou en fonction de ce risque. La vanne de décharge peut être naturellement commandée dans la position ouverte dès lors que la vanne ECS est fermée. Néanmoins, lorsque la vanne ECS n'est que partiellement fermée, il est difficile d'identifier a priori les situations dans lesquelles le phénomène de pompage risque de se produire. Il existe ainsi un besoin d'identifier ces situations de façon fiable.

Une première solution pour identifier un risque de pompage consiste à déterminer les paramètres du fluide en amont et en aval du compresseur de charge, notamment sa pression totale, sa température et son débit. Cette solution est parfaitement fiable en théorie mais présente l'inconvénient de reposer sur l'utilisation de nombreux capteurs. Ces capteurs engendrent un coût important et sont sujets à des dysfonctionnements rendant la solution peu fiable en pratique. En outre, les capteurs de débit sont difficilement intégrables dans le compresseur de charge.

Une deuxième solution pour identifier un risque de pompage du compresseur de charge comprend la détermination d'un paramètre de pompage $P_{pomp}$ défini par le rapport entre une pression totale $Pt_{1300}$ en sortie du compresseur de charge et une pression statique $Ps_{1270i}$ en amont du diffuseur du compresseur de charge, selon la relation :

$$P_{pomp} = \frac{Pt_{1300} - Ps_{1270i}}{Pt_{1300}}$$

Cependant, la relation entre ce paramètre de pompage $P_{pomp}$ et le débit en sortie du compresseur de charge n'est pas bijective. Pour un même critère de pompage, deux valeurs de débit sont possibles. La détermination du débit en sortie du compresseur de charge requiert la détermination de paramètres supplémentaires. Il est notamment possible de s'appuyer sur le degré d'ouverture des IGV et un paramètre B calculé à partir de la pression statique $Ps_{1270i}$, de la pression statique ambiante $Ps_{amb}$, de la température ambiante $T_{amb}$ et de la température $T_{1300}$ en sortie du compresseur de charge :

$$B = \frac{Ps_{1270i}}{Ps_{amb}} \cdot \frac{T_{amb}}{T_{1300} - T_{amb}}$$

Le calcul du paramètre B implique ainsi la mesure d'une pression supplémentaire $Ps_{amb}$ et de deux températures $T_{amb}$ et $T_{1300}$. La deuxième solution souffre ainsi des mêmes inconvénients que la première solution.

Encore une autre solution est décrite dans le document US 2007/248453 A1.

Compte tenu de ce qui précède, l'invention a pour objectif de fournir une solution pour identifier de façon fiable et économique un risque de phénomène de pompage dans un compresseur de charge équipant un groupe auxiliaire de puissance d'un aéronef. En particulier, l'invention vise à limiter le nombre de paramètres à mesurer pour déterminer ce risque de pompage. L'invention vise en outre à établir une relation bijective entre un paramètre de pompage quantifiant le risque de pompage et un débit en sortie du compresseur de charge. L'invention a encore pour objectif de fournir un procédé et un dispositif dont les coûts de conception, de fabrication et de maintenance sont compatibles avec une utilisation à échelle industrielle.

## EXPOSÉ DE L'INVENTION

À cet effet, l'invention repose sur une sélection judicieuse de paramètres à mesurer permettant la détermination d'un paramètre de pompage à l'aide d'une relation limitant le nombre de ces paramètres. Les paramètres sélectionnés permettent en outre d'établir une relation bijective entre le paramètre de pompage et le débit du compresseur de charge.

Plus précisément, l'invention a pour objet un procédé de détermination d'un paramètre de pompage $P_{pomp}$ représentatif d'un risque de phénomène de pompage dans un compresseur de charge équipant un groupe auxiliaire de puissance pour un aéronef. Le compresseur de charge comprend un diffuseur et une volute disposée en aval du diffuseur. Le procédé selon l'invention comprend le calcul du paramètre de pompage $P_{pomp}$ comme somme d'un premier terme $T_1$ et d'un deuxième terme $T_2$. Le premier terme $T_1$ est calculé à partir d'une première pression $P_1$ mesurée en aval du diffuseur et d'une deuxième pression $P_2$ mesurée en amont du diffuseur; le deuxième terme $T_2$ est calculé à partir d'une troisième pression $P_3$ mesurée en amont du diffuseur et d'une pression ambiante $Ps_{amb}$ représentant une pression de l'environnement ambiant du groupe auxiliaire de puissance (APU).

Le paramètre de pompage $P_{pomp}$ est ainsi calculé à partir de quatre pressions, ou trois lorsque les pressions $P_2$ et $P_3$ sont identiques. Aucune mesure de température ou de débit n'est nécessaire.

Le compresseur de charge peut notamment être un compresseur radial. Le diffuseur est alors un diffuseur radial.

La première pression $P_1$ est par exemple une pression totale $Pt_{1300}$ en amont de la volute, une pression totale $Pt_{1800}$ en aval de la volute, une pression statique $Ps_{1300}$ en amont de la volute ou une pression statique $Ps_{1800}$ en aval de la volute. Les pressions totale $Pt_{1300}$ et statique $Ps_{1300}$ sont alors mesurées à l'interface entre le diffuseur et la volute. Le positionnement du capteur de pression, en amont ou en aval de la volute, est choisi en fonction de la pente de la courbe représentative du premier terme $T_1$, et des possibilités d'intégration de ce capteur dans le compresseur de charge.

La deuxième pression $P_2$ et/ou la troisième pression $P_3$ est par exemple une pression statique en amont du diffuseur. De préférence, la pression $P_3$ est une pression statique $Ps_{1270i}$ mesurée au niveau de l'inter-pale bord d'attaque du diffuseur. Autrement dit, la pression statique $Ps_{1270i}$ est une pression statique mesurée entre des pales du diffuseur au niveau de leur bord d'attaque. Avantageusement, la pression $P_3$ est déterminée comme étant une moyenne des pressions mesurées entre les différents couples de pales du diffuseur au niveau de leur bord d'attaque.

La pression ambiante $Ps_{amb}$ est par exemple une pression statique de l'environnement ambiant du groupe auxiliaire de puissance.

Selon un premier mode de réalisation, le premier terme $T_1$ est calculé à l'aide de l'équation suivante :

$$T_1 = \frac{P_1 - P_2}{P_1}$$

Le premier terme $T_1$ peut notamment être calculé à l'aide de l'équation suivante :

$$T_1 = \frac{Pt_{1300} - Ps_{1270i}}{Pt_{1300}}$$

Selon un deuxième mode de réalisation, le deuxième terme $T_2$ est calculé à l'aide de l'équation suivante :

$$T_2 = \frac{1}{1 + \exp\big(10.\,(P_3 - Ps_{amb})\big)}$$

En particulier, lorsque la pression $P_3$ est la pression statique $Ps_{1270i}$, le deuxième terme $T_2$ devient :

$$T_2 = \frac{1}{1 + \exp\big(10.\,(Ps_{1270i} - Ps_{amb})\big)}$$

Les premier et deuxième modes de réalisation sont compatibles et donnent la relation suivante pour déterminer le paramètre de pompage $P_{pomp}$ :

$$P_{pomp} = \frac{Pt_{1300} - Ps_{1270i}}{Pt_{1300}} + \frac{1}{1 + \exp\big(10.\,(Ps_{1270i} - Ps_{amb})\big)}$$

L'invention a également pour objet un procédé de commande d'une vanne de décharge pour un compresseur de charge équipant un groupe auxiliaire de puissance pour un aéronef, le compresseur de charge comprenant un diffuseur et une volute disposée en aval du diffuseur, la vanne de décharge étant disposée en aval de la volute. Selon l'invention, le procédé de commande comprend :

- la détermination du paramètre de pompage $P_{pomp}$ conformément au procédé de détermination tel que décrit précédemment,
- une comparaison du paramètre de pompage $P_{pomp}$ déterminé par le procédé de détermination avec un seuil de décharge prédéterminé et
- une ouverture de la vanne de décharge lorsque le paramètre de pompage $P_{pomp}$ est inférieur au seuil de décharge ou lorsque le paramètre de pompage $P_{pomp}$ est supérieur au seuil de décharge.

Lorsque le paramètre de pompage $P_{pomp}$ est défini par les premier et deuxième modes de réalisation, la vanne de décharge est ouverte lorsque le paramètre de pompage $P_{pomp}$ est supérieur au seuil de décharge.

L'invention a encore pour objet un dispositif de commande d'une vanne de décharge pour un compresseur de charge équipant un groupe auxiliaire de puissance pour un aéronef, le compresseur de charge comprenant un diffuseur et une volute disposée en aval du diffuseur, et la vanne de décharge étant disposée en aval de la volute. Selon l'invention, le dispositif de commande comprend une unité de traitement agencée pour déterminer le paramètre de pompage $P_{pomp}$ conformément au procédé de détermination décrit précédemment, pour comparer ledit paramètre de pompage $P_{pomp}$ à un seuil de décharge prédéterminé et pour commander l'ouverture de la vanne de décharge lorsque le paramètre de pompage $P_{pomp}$ est inférieur au seuil de décharge ou lorsque le paramètre de pompage $P_{pomp}$ est supérieur au seuil de décharge.

L'invention a enfin pour objet un groupe auxiliaire de puissance pour un aéronef, le groupe auxiliaire de puissance comprenant un compresseur de charge, une vanne de décharge et un dispositif de commande de la vanne de décharge tel que décrit ci-dessus. Le compresseur de charge comprend un diffuseur et une volute disposée en aval du diffuseur, et la vanne de décharge est disposée en aval de la volute.

## BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :

- la figure 1 représente un exemple de groupe auxiliaire de puissance comprenant une vanne de décharge pour un compresseur de charge et une unité de traitement agencée pour commander la vanne de décharge conformément au procédé de commande selon l'invention ;
- la figure 2 représente schématiquement un compresseur de charge du groupe auxiliaire de puissance de la figure 1 ;
- la figure 3 représente un exemple de procédé de commande de la vanne de décharge selon l'invention.

## DESCRIPTION DÉTAILLÉE

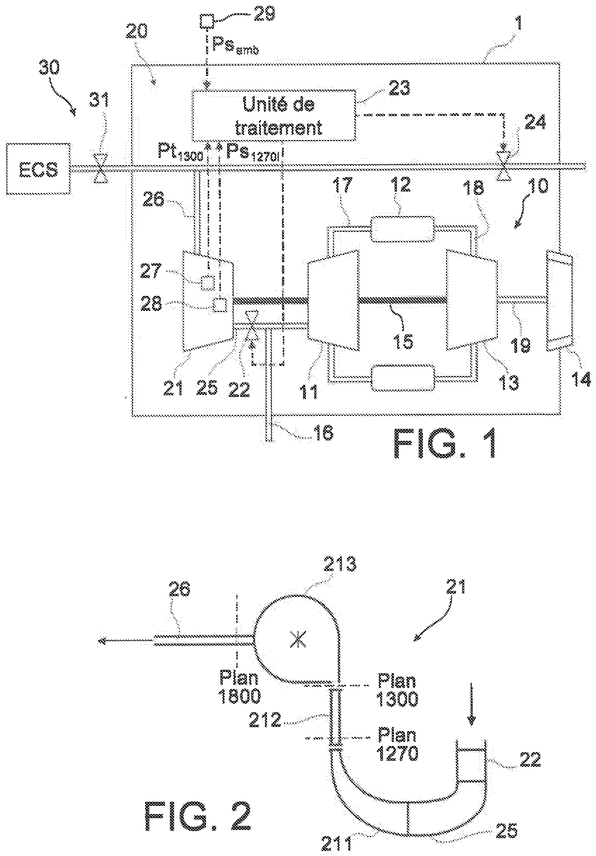

La figure 1 représente schématiquement un exemple de groupe auxiliaire de puissance 1 apte à équiper un aéronef. Le groupe auxiliaire de puissance 1, appelé « Auxiliary Power Unit » (APU) en anglais, comprend un générateur de gaz 10 et un système de fourniture d'air comprimé 20. Le générateur de gaz 10 comporte un compresseur principal 11, une chambre de combustion 12, une turbine 13, une tuyère 14, un arbre de puissance 15, une conduite d'alimentation en air 16, une conduite d'air comprimé 17, une conduite de gaz brûlés 18 et une conduite d'éjection 19. Le compresseur principal 11 est alimenté en air par la conduite d'alimentation en air 16 et fournit de l'air comprimé à la chambre de combustion 12 par l'intermédiaire de la conduite d'air comprimé 17. L'air comprimé est mélangé à du carburant dans la chambre de combustion 12. La combustion de ce mélange génère des gaz fortement énergétiques qui sont conduits dans la turbine 13 par la conduite de gaz brûlés 18. Le passage de ces gaz dans la turbine 13 conduit à sa rotation. L'arbre de puissance 15 relie mécaniquement la turbine 13 au compresseur principal 11, de sorte que le compresseur principal 11 est également entraîné en rotation. Après leur passage dans la turbine 13, les gaz d'échappement sont éjectés du groupe auxiliaire de puissance 1 par la conduite d'éjection 19 et la tuyère 14.

Le système de fourniture d'air comprimé 20 comprend un compresseur de charge 21, des volets d'entrée d'air 22, une unité de traitement 23, une vanne de décharge 24, une conduite d'entrée d'air 25, une conduite de sortie d'air 26, un premier capteur de pression 27, un deuxième capteur de pression 28 et un troisième capteur de pression 29. La figure 2 représente schématiquement le compresseur de charge 21. Le compresseur de charge 21 est un compresseur radial. Il est alimenté en air depuis la conduite d'alimentation en air 16 par l'intermédiaire de la conduite d'entrée d'air 25. Les volets d'entrée d'air 22 sont positionnées sur la conduite d'entrée d'air 25, de manière à réguler le débit d'air parvenant en entrée du compresseur de charge 21 sans interférer sur le débit d'air parvenant au compresseur principal 11. Les volets d'entrée d'air 22 sont également appelés « IGV ». Le compresseur de charge 21 comprend un rouet 211, un diffuseur 212 et une volute 213. Le rouet 211 est relié mécaniquement à l'arbre de puissance 15 afin d'être entraîné en rotation avec le compresseur principal 11 et la turbine 13. La volute 213 est disposée en aval du diffuseur 212 et reliée à une entrée de la conduite de sortie d'air 26. La conduite de sortie d'air 26 est en outre reliée en sortie à la vanne de décharge 24 et à un système de régulation climatique 30. Dans l'exemple de réalisation de la figure 1, le premier capteur de pression 27 mesure la pression totale $Pt_{1300}$ au niveau de l'interface entre le diffuseur 212 et la volute 213 du compresseur de charge 21. Le deuxième capteur de pression 28 mesure la pression statique $Ps_{1270i}$ en amont du diffuseur 212. Le troisième capteur de pression 29 mesure une pression statique $Ps_{amb}$ de l'environnement ambiant du groupe auxiliaire de puissance 1. Selon d'autres exemples de réalisation, les capteurs de pression 27, 28, 29 peuvent mesurer d'autres pressions. En particulier, le capteur de pression 27 pourrait mesurer la pression statique $Ps_{1300}$ au niveau de l'interface entre le diffuseur 212 et la volute 213 du compresseur de charge 21, ou la pression totale $Pt_{1800}$ ou statique $Ps_{1800}$ en aval de la volute 213. Le capteur de pression 29 pourrait mesurer la pression totale $Pt_{amb}$ de l'environnement ambiant. L'unité de traitement 23 comprend par exemple un processeur. Elle est agencée pour recevoir les mesures des capteurs de pression 27, 28 et 29, déterminer un paramètre de pompage $P_{pomp}$ à partir de ces mesures, et commander l'ouverture de la vanne de décharge 24 en fonction de ce paramètre de pompage $P_{pomp}$ et d'un seuil de décharge prédéterminé $Th_{dis}$, comme décrit ci-dessous. L'unité de traitement 23 peut en outre être agencée pour piloter les volets d'entrée d'air 22, par exemple en fonction d'une ou plusieurs mesures issues des capteurs de pression 27, 28, 29, et/ou d'autres mesures.

Le système de régulation climatique 30 est agencé pour réguler la pression d'air à l'intérieur de la cabine de l'aéronef. Il comprend notamment une vanne 31, appelée vanne ECS, permettant de réguler le débit d'air en entrée du système de régulation climatique. La vanne ECS 31 peut notamment être positionnée en position fermée lorsque l'air comprimé est fourni au système de régulation climatique 30 par les moteurs principaux.

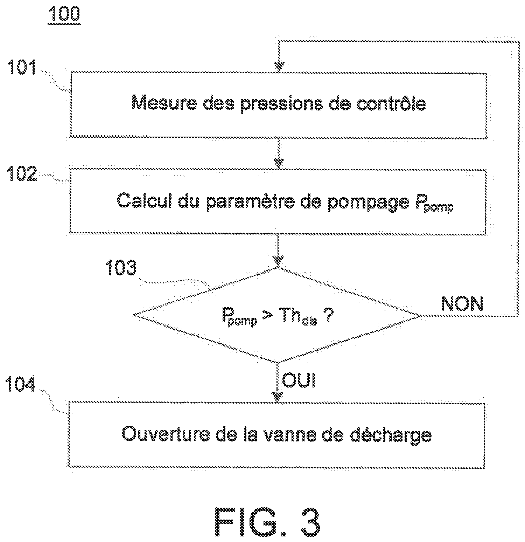

La figure 3 représente un exemple de procédé de commande de la vanne de décharge 24. Le procédé de commande 100 comprend une étape 101 de mesure de trois pressions de contrôle, à savoir la pression totale $Pt_{1300}$ en amont de la volute 213, la pression statique $Ps_{1270i}$ en amont du diffuseur 212 et la pression statique $Ps_{amb}$ de l'environnement ambiant du groupe auxiliaire de puissance. Dans une étape 102, le paramètre de pompage $P_{pomp}$ est calculé à partir de ces pressions de contrôle :

$$P_{pomp} = \frac{Pt_{1300} - Ps_{1270i}}{Pt_{1300}} + \frac{1}{1 + \exp\big(10.\,(Ps_{1270i} - Ps_{amb})\big)}$$

Le procédé comprend ensuite une étape 103 de comparaison de ce paramètre de pompage $P_{pomp}$ avec un seuil de décharge prédéterminé $Th_{dis}$. Ce seuil de décharge $Th_{dis}$ peut être constant quel que soit le régime du générateur de gaz 10 et de la position d'ouverture des IGV. Si le paramètre de pompage $P_{pomp}$ est inférieur ou égal au seuil de décharge $Th_{dis}$, le procédé 100 reprend à l'étape 101 de mesure des pressions de contrôle de manière à réaliser une boucle de surveillance. Si, en revanche, le paramètre de pompage calculé à l'étape 102 est supérieur au seuil de décharge $Th_{dis}$, le procédé passe à l'étape 104 d'ouverture de la vanne de décharge 24. Au cours de cette étape 104, la vanne de décharge 24 est ouverte afin de diminuer la pression en sortie du compresseur de charge 21 et ainsi éviter le phénomène de pompage. La vanne de décharge 24 peut être ouverte complètement ou partiellement.

Le procédé de commande de la vanne de décharge selon l'invention permet ainsi d'éviter au compresseur de charge d'entrer dans un phénomène de pompage en contrôlant ce risque de pompage à l'aide d'un nombre limité de paramètres mesurés.

**Revendications**

1. Procédé de détermination d'un paramètre de pompage représentatif d'un risque de phénomène de pompage dans un compresseur de charge (21) équipant un groupe auxiliaire de puissance (1) pour un aéronef, le compresseur de charge (21) comprenant un diffuseur (212) et une volute (213) disposée en aval du diffuseur, le procédé comprenant le calcul (102) du paramètre de pompage $P_{pomp}$ comme somme d'un premier terme $T_1$ et d'un deuxième terme $T_2$, le premier terme $T_1$ étant calculé à partir d'une première pression $P_1$ mesurée en aval du diffuseur (212) et d'une deuxième pression $P_2$ mesurée en amont du diffuseur, le deuxième terme $T_2$ étant calculé à partir d'une troisième pression $P_3$ mesurée en amont du diffuseur (212) et d'une pression ambiante $Ps_{amb}$ représentant une pression de l'environnement ambiant du groupe auxiliaire de puissance.

2. Procédé selon la revendication 1, dans lequel la première pression $P_1$ est une pression totale $Pt_{1300}$ en amont de la volute (213), une pression totale $Pt_{1800}$ en aval de la volute (213), une pression statique $Ps_{1300}$ en amont de la volute (213) ou une pression statique $Ps_{1800}$ en aval de la volute (213).

3. Procédé selon l'une des revendications 1 et 2, dans lequel la deuxième pression $P_2$ et/ou la troisième pression $P_3$ est une pression statique $Ps_{1270i}$ en amont du diffuseur mesurée entre des pales du diffuseur au niveau de leur bord d'attaque.

4. Procédé selon l'une des revendications précédentes, dans lequel la pression ambiante $Ps_{amb}$ est une pression statique de l'environnement ambiant du groupe auxiliaire de puissance.

5. Procédé selon l'une des revendications précédentes, dans lequel le premier terme $T_1$ est calculé à l'aide de l'équation suivante :

$$T_1 = \frac{P_1 - P_2}{P_1}$$

6. Procédé selon l'une des revendications précédentes, dans lequel le deuxième terme $T_2$ est calculé à l'aide de l'équation suivante :

$$T_2 = \frac{1}{1 + \exp\big(10.\,(P_3 - Ps_{amb})\big)}$$

7. Procédé de commande d'une vanne de décharge (24) pour un compresseur de charge (21) équipant un groupe auxiliaire de puissance (1) pour un aéronef, le compresseur de charge (21) comprenant un diffuseur (212) et une volute (213) disposée en aval du diffuseur, la vanne de décharge (24) étant disposée en aval de la volute (213), le procédé de commande (100) comprenant :

   - le calcul (102) du paramètre de pompage $P_{pomp}$ conformément au procédé de détermination selon l'une des revendications précédentes,
   - une comparaison (103) du paramètre de pompage $P_{pomp}$ déterminé par le procédé de détermination avec un seuil de décharge $Th_{dis}$ prédéterminé et
   - une ouverture (104) de la vanne de décharge (24) lorsque le paramètre de pompage $P_{pomp}$ est inférieur au seuil de décharge $Th_{dis}$ ou lorsque le paramètre de pompage $P_{pomp}$ est supérieur au seuil de décharge $Th_{dis}$.

8. Dispositif de commande d'une vanne de décharge (24) pour un compresseur de charge (21) équipant un groupe auxiliaire de puissance (1) pour un aéronef, le compresseur de charge (21) comprenant un diffuseur (212) et une volute (213) disposée en aval du diffuseur, la vanne de décharge (24) étant disposée en aval de la volute (213), le dispositif de commande comprenant une unité de traitement (23) agencée pour déterminer le paramètre de pompage $P_{pomp}$ conformément au procédé de détermination selon l'une des revendications 1 à 6, pour comparer ledit para-

mètre de pompage $P_{pomp}$ à un seuil de décharge $Th_{dis}$ prédéterminé et pour commander l'ouverture de la vanne de décharge (24) lorsque le paramètre de pompage $P_{pomp}$ est inférieur au seuil de décharge $Th_{dis}$ ou lorsque le paramètre de pompage $P_{pomp}$ est supérieur au seuil de décharge Thdis.

9. Groupe auxiliaire de puissance pour un aéronef, le groupe auxiliaire de puissance (1) comprenant un compresseur de charge (21), une vanne de décharge (24) et un dispositif de commande de la vanne de décharge selon la revendication 8, le compresseur de charge (21) comprenant un diffuseur (212) et une volute (213) disposée en aval du diffuseur, et la vanne de décharge (24) étant disposée en aval de la volute (213).

**Patentansprüche**

1. Verfahren zum Bestimmen eines Pumpparameters, repräsentativ für eine Gefahr eines Pumpphänomens in einem Ladekompressor (21), der einen Hilfsantrieb (1) für ein Luftfahrzeug ausrüstet, wobei der Ladekompressor (21) einen Diffusor (212) und ein Spiralgehäuse (213) umfasst, das stromabwärts des Diffusors gelegen angeordnet ist, wobei das Verfahren das Berechnen (102) des Pumpparameters $P_{pomp}$ als Summe eines ersten Summanden $T_1$ und eines zweiten Summanden $T_2$ umfasst, wobei der erste Summand $T_1$ aus einem ersten Druck $P_1$ berechnet wird, der stromabwärts des Diffusors (212) gelegen gemessen wird, und einem zweiten Druck $P_2$, der stromaufwärts des Diffusors gelegen gemessen wird, der zweite Summand $T_2$ aus einem dritten Druck $P_3$ berechnet wird, der stromaufwärts des Diffusors (212) gelegen gemessen wird, und einem Umgebungsdruck $Ps_{amb}$, der einen Druck der umgebenden Umwelt des Hilfsantriebs repräsentiert.

2. Verfahren nach Anspruch 1, wobei der erste Druck $P_1$ ein Gesamtdruck $Pt_{1300}$ stromaufwärts des Spiralgehäuses (213) gelegen, ein Gesamtdruck $Pt_{1800}$ stromabwärts des Spiralgehäuses (213) gelegen, ein statischer Druck $Ps_{1300}$ stromaufwärts des Spiralgehäuses (213) gelegen oder ein statischer Druck $Ps_{1800}$ stromabwärts des Spiralgehäuses (213) gelegen ist.

3. Verfahren nach einem der Ansprüche 1 und 2, wobei der zweite Druck $P_2$ und/oder der dritte Druck $P_3$ ein statischer Druck $Ps_{1270i}$ stromaufwärts des Diffusors gelegen ist, der zwischen den Blättern des Diffusors im Bereich ihrer Vorderkante gemessen wird.

4. Verfahren nach einem der vorstehenden Ansprüche, wobei der Umgebungsdruck $Ps_{amb}$ ein statischer Druck der umgebenden Umwelt des Hilfsantriebs ist.

5. Verfahren nach einem der vorstehenden Ansprüche, wobei der erste Summand $T_1$ mithilfe der folgenden Gleichung berechnet wird:

$$T_1 = \frac{P_1 - P_2}{P_1}$$

6. Verfahren nach einem der vorstehenden Ansprüche, wobei der zweite Summand $T_2$ mithilfe der folgenden Gleichung berechnet wird:

$$T_2 = \frac{1}{1 + \exp\left(10.(P_3 - Ps_{amb})\right)}$$

7. Verfahren zum Steuern eines Ablassventils (24) für einen Ladekompressor (21), der einen Hilfsantrieb (1) für ein Luftfahrzeug ausrüstet, wobei der Ladekompressor (21) einen Diffusor (212) und ein Spiralgehäuse (213) umfasst, das stromabwärts des Diffusors gelegen angeordnet ist, wobei das Ablassventil (24) stromabwärts des Spiralgehäuses (213) gelegen angeordnet ist, wobei das Verfahren zum Steuern (100) umfasst:

   - das Berechnen (102) des Pumpparameters $P_{pomp}$ entsprechend dem Verfahren zum Bestimmen nach einem der vorstehenden Ansprüche,
   - ein Vergleichen (103) des durch das Verfahren zum Bestimmen bestimmten Pumpparameters $P_{pomp}$ mit einer vorbestimmten Ablassschwelle $Th_{dis}$, und
   - ein Öffnen (104) des Ablassventils (24), wenn der Pumpparameter $P_{pomp}$ kleiner als die Ablassschwelle $Th_{dis}$

ist, oder wenn der Pumpparameter $P_{pomp}$ größer als die Ablassschwelle $Th_{dis}$ ist.

8. Vorrichtung zum Steuern eines Ablassventils (24) für einen Ladekompressor (21), der einen Hilfsantrieb (1) für ein Luftfahrzeug ausrüstet, wobei der Ladekompressor (21) einen Diffusor (212) und ein Spiralgehäuse (213) umfasst, das stromabwärts des Diffusors gelegen angeordnet ist, wobei das Ablassventil (24) stromabwärts des Spiralgehäuses (213) gelegen angeordnet ist, wobei die Vorrichtung zum Steuern eine Verarbeitungseinheit (23) umfasst, die angeordnet ist, um den Pumpparameter $P_{pomp}$ entsprechend dem Verfahren zum Bestimmen nach einem der Ansprüche 1 bis 6 zu bestimmen, um den Pumpparameter $P_{pomp}$ mit einer vorbestimmten Ablassschwelle $Th_{dis}$ zu vergleichen, und um das Öffnen des Ablassventils (24) zu steuern, wenn der Pumpparameter $P_{pomp}$ kleiner als die Ablassschwelle $Th_{dis}$ ist, oder wenn der Pumpparameter $P_{pomp}$ größer als die Ablassschwelle $Th_{dis}$ ist.

9. Hilfsantrieb für ein Luftfahrzeug, wobei der Hilfsantrieb (1) einen Ladekompressor (21), ein Ablassventil (24) und eine Vorrichtung zum Steuern des Ablassventils nach Anspruch 8 umfasst, wobei der Ladekompressor (21) einen Diffusor (212) und ein Spiralgehäuse (213), das stromabwärts des Diffusors gelegen angeordnet ist, umfasst, und das Ablassventil (24) stromabwärts des Spiralgehäuses (213) gelegen angeordnet ist.

**Claims**

1. A method for determining a pumping parameter representative of a risk of positive pumping in a charging compressor (21) equipping an auxiliary power unit (1) for an aircraft, the charging compressor (21) comprising a diffuser (212) and a scroll (213) disposed downstream of the diffuser, the method comprising calculating (102) the pumping parameter $P_{pomp}$ as a sum of a first term $T_1$ and of a second term $T_2$, the first term $T_1$ being calculated from a first pressure $P_1$ measured downstream of the diffuser (212) and from a second pressure $P_2$ measured upstream of the diffuser, the second term $T_2$ being calculated from a third pressure $P_3$ measured upstream of the diffuser (212) and from an ambient pressure $Ps_{amb}$ representing a pressure of the ambient environment of the auxiliary power unit.

2. The method according to claim 1, wherein the first pressure $P_1$ is a total pressure $Pt_{1300}$ upstream of the scroll (213), a total pressure $Pt_{1800}$ downstream of the scroll (213), a static pressure $Ps_{1300}$ upstream of the scroll (213) or a static pressure $Ps_{1800}$ downstream of the scroll (213).

3. The method according to one of claims 1 and 2, wherein the second pressure $P_2$ and/or the third pressure $P_3$ is a static pressure $Ps_{1270i}$ upstream of the diffuser measured between the blades of the diffuser at their leading edge.

4. The method according to one of the preceding claims, wherein the ambient pressure $Ps_{amb}$ is a static pressure of the ambient environment of the auxiliary power unit.

5. The method according to one of the preceding claims, wherein the first term $T_1$ is calculated using the following equation:

$$T_1 = \frac{P_1 - P_2}{P_1}$$

.

6. The method according to one of the preceding claims, wherein the second term $T_2$ is calculated using the following equation:

$$T_2 = \frac{1}{1 + \exp\big(10.\,(P_3 - Ps_{amb})\big)}$$

.

7. A method for controlling a discharge valve (24) for a charging compressor (21) equipping an auxiliary power unit (1) for an aircraft, the charging compressor (21) comprising a diffuser (212) and a scroll (213) disposed downstream of the diffuser, the discharge valve (24) being disposed downstream of the scroll (213), the control method (100) comprising:

- calculating (102) the pumping parameter $P_{pomp}$ in accordance with the determination method according to one of the preceding claims,
- comparing (103) the pumping parameter $P_{pomp}$ determined by the determination method with a predetermined discharge threshold $Th_{dis}$ and
- opening (104) the discharge valve (24) when the pumping parameter $P_{pomp}$ is lower than the discharge threshold $Th_{dis}$ or when the pumping parameter $P_{pomp}$ is greater than the discharge threshold $Th_{dis}$.

8. A device for controlling a discharge valve (24) for a charging compressor (21) equipping an auxiliary power unit (1) for an aircraft, the charging compressor (21) comprising a diffuser (212) and a scroll (213) disposed downstream of the diffuser, the discharge valve (24) being disposed downstream of the scroll (213), the control device comprising a processing unit (23) arranged to determine the pumping parameter $P_{pomp}$ in accordance with the determination method according to one of claims 1 to 6, to compare said the pumping parameter $P_{pomp}$ to a predetermined discharge threshold $Th_{dis}$ and to control opening of the discharge valve (24) when the pumping parameter $P_{pomp}$ is lower than the discharge threshold $Th_{dis}$ or when the pumping parameter $P_{pomp}$ is greater than the discharge threshold $Th_{dis}$.

9. An auxiliary power unit for an aircraft, the auxiliary power unit (1) comprising a charging compressor (21), a discharge valve (24) and a device for controlling the discharge valve according to claim 8, the charging compressor (21) comprising a diffuser (212) and a scroll (213) disposed downstream of the diffuser, and the discharge valve (24) being disposed downstream of the scroll (213).

FIG. 1

FIG. 2

<u>100</u>

101 — Mesure des pressions de contrôle

102 — Calcul du paramètre de pompage $P_{pomp}$

103 — $P_{pomp} > Th_{dis}$ ?  — NON

OUI

104 — Ouverture de la vanne de décharge

# FIG. 3

## RÉFÉRENCES CITÉES DANS LA DESCRIPTION

**Documents brevets cités dans la description**

- US 2007248453 A1